# FASCICULE DE BREVET EUROPEEN

(11) **EP 2 855 055 B1**
(45) Date de publication et mention de la délivrance du brevet: **13.03.2019**
(21) Numéro de dépôt: 13727854.5
(22) Date de dépôt: 03.06.2013
(51) Int. Cl.: B22F 3/105, B29C 67/00

(54) **MACHINE ET PROCÉDÉ POUR LA FABRICATION ADDITIVE À BASE DE POUDRE**
MASCHINE UND VERFAHREN ZUR HERSTELLUNG EINES AUF PULVER BASIERENDEN ADDITIVS
MACHINE AND METHOD FOR POWDER-BASED ADDITIVE MANUFACTURING

(30) Priorité: 01.06.2012 FR 1255089
(43) Date de publication de la demande: 08.04.2015
(73) Titulaire: Compagnie Générale des Etablissements Michelin, 63000 Clermont-Ferrand (FR)
(72) Inventeur: PIALOT, Frédéric, F-63040 Clermont-Ferrand Cedex 9 (FR); WALRAND, Gilles, F-63040 Clermont-Ferrand Cedex 9 (FR); WIEL, Pierre, F-63040 Clermont-Ferrand Cedex 9 (FR)
(74) Mandataire: Noel, Luminita
(86) Numéro de dépôt international: PCT/EP2013/061402
(87) Numéro de publication internationale: WO 2013/178825

(56) Documents cités:
- EP-A1- 1 234 625
- WO-A1-2008/061727
- WO-A1-2011/033215
- DE-A1- 10 235 427
- DE-A1-102005 014 483
- DE-A1-102007 050 679
- DE-U1-202011 003 443
- US-A1- 2005 263 934

## Description

L'invention concerne les machines et les procédés pour la fabrication additive à base de poudre par frittage ou fusion des grains de ladite poudre à l'aide d'un faisceau énergétique comme un rayonnement électromagnétique (par exemple un faisceau laser) ou un faisceau de particules (par exemple un faisceau d'électrons).

L'invention se rapporte en particulier à l'architecture de la machine et aux moyens et procédés pour la mise en couche, c'est à dire pour la préparation du lit de poudre préalable au frittage ou à la fusion de ladite couche à l'aide du faisceau énergétique.

Le document EP-1641580-B1 divulgue en particulier un dispositif de mise en couche pour le frittage par laser de poudres (métalliques ou céramiques). Ce dispositif comprend un plateau d'alimentation permettant de stocker la poudre et de la délivrer en quantité contrôlée à un cylindre rainuré apte d'une part à transférer et répartir ladite quantité de poudre sur le plateau de dépôt lors d'un premier passage du cylindre sur la zone de travail et d'autre part à compacter la poudre par un mouvement de roulage du cylindre lors d'un deuxième passage. La poudre est ensuite soumise au faisceau laser. Un inconvénient de cette configuration est l'encombrement et le coût important du plateau d'alimentation. Un autre inconvénient vient du fait que la longueur de la zone de travail est limitée par le périmètre utile du cylindre.

Le document WO-2011/007087-A2 divulgue un dispositif de mise en couche pour la fusion par laser de poudres. Ce dispositif comprend un plateau d'alimentation permettant de stocker la poudre et de la délivrer en quantité contrôlée à un système de raclette apte à alimenter le plateau de dépôt et de cylindre(s) apte(s) à répartir et compacter ladite quantité de poudre sur le plateau de dépôt. La poudre est ensuite soumise au faisceau laser. Un inconvénient de cette configuration est l'encombrement et le coût important du plateau d'alimentation ainsi que la nécessaire complexité de la machine du fait du grand nombre d'outillages à contrôler (raclette, cylindre(s) de répartition et/ou de compactage, vérins des plateaux).

Le document US-2005/0263934-A1 divulgue un dispositif de mise en couche pour le frittage par laser de poudres. Ce dispositif comprend des moyens d'alimentation et de dosage permettant de délivrer la poudre en quantité contrôlée à proximité de la zone de travail. L'alimentation se fait par gravité à partir d'un stock de poudre placée au-dessus. Une raclette permet de régler l'épaisseur d'un tas de poudre qui est ensuite soumis à une opération de préchauffage. Un cylindre rotatif permet ensuite de transférer et répartir ladite quantité de poudre préchauffée sur la zone de travail. Une quantité de poudre peut également être déposée sur le capot du chariot emportant le cylindre d'un côté à l'autre de la zone de travail et ainsi n'être mise en oeuvre qu'au cours du retour du cylindre. Un inconvénient de cette configuration est le risque qu'une partie (même infime) de la poudre soit retenue sur le capot et tombe ensuite dans la zone de travail lors du passage du chariot au-dessus du lit de poudre. Ce risque n'est pas acceptable dans le cadre d'une utilisation industrielle.

Le document DE-10235427 décrit une machine de fabrication additive comprenant deux zones de travail distinctes et séparées l'une de l'autre, chacune de ces zones ayant son propre plateau de travail et son propre dispositif de mise en couche.

Un problème supplémentaire commun aux différentes propositions de l'état de la technique est une faible productivité globale de l'installation car lors des phases de mise en couche, la fusion est interrompue et, réciproquement, lors des phases de fusion, la mise en couche ne peut pas se dérouler.

Un autre problème commun aux différentes propositions de l'état de la technique est la difficulté et parfois l'impossibilité d'obtenir une épaisseur et une densité homogènes de la couche de poudre sur toute l'étendue (longueur, largeur) de la zone de travail.

L'invention a donc pour objectif de pallier l'un au moins des inconvénients décrits ci-dessus.

L'invention propose pour cela une machine pour la fabrication additive par frittage ou fusion de poudre à l'aide d'un faisceau énergétique agissant sur une couche de poudre dans une zone de travail, ladite machine comprenant un dispositif de mise en couche de ladite poudre, ledit dispositif comprenant :
- des moyens de stockage de la poudre,
- des moyens de répartition de la poudre aptes à parcourir la zone de travail afin de répartir la poudre en une couche d'épaisseur finale adaptée à la fabrication additive,
- des moyens d'alimentation aptes à transférer la poudre des moyens de stockage aux moyens de répartition,
- des moyens de dosage aptes à contrôler la quantité de poudre transférée des moyens de stockage aux moyens de répartition,
- les moyens de stockage sont placés plus haut que la zone de travail,
- les moyens d'alimentation utilisent la gravité,
- les moyens d'alimentation et les moyens de dosage sont mobiles avec les moyens de répartition,
- la machine comporte deux zones de travail distinctes,
- la machine comporte deux plateaux de travail distincts et mobiles indépendamment l'un de l'autre,
- chacun des deux plateaux de travail distincts est associé à une seule des deux zones de travail distinctes,
   ladite machine étant caractérisée en ce que :
- le dispositif de mise en couche est commun aux deux zones de travail.

Ainsi, l'opération de fusion dans l'une des deux zones de travail peut se faire pendant que se déroule une opération de mise en couche dans l'autre zone de travail.

De préférence, la machine comprend en outre une zone d'attente centrale située entre les deux zones de travail, ladite zone d'attente centrale étant apte à accueillir le dispositif de mise en couche. Ainsi, lorsqu'il est inactif, le dispositif de mise en couche peut libérer simultanément les deux zones de travail pour l'étape de fusion tout en demeurant disponible pour appliquer une nouvelle couche de poudre sur l'une ou l'autre zone de travail.

De préférence encore, la machine comprend en outre une source propre et des moyens de contrôle du faisceau énergétique propres à chacune des deux zones de travail.

De préférence encore, le dispositif de mise en couche est configuré de manière à réaliser la mise en couche en parcourant la zone de travail dans le même sens pour les deux zones de travail.

De préférence encore, le dispositif de mise en couche est configuré de manière à réaliser la mise en couche en une seule passe sur une zone de travail.

De préférence, les moyens de stockage comprennent une trémie, ladite trémie étant mobile avec les moyens d'alimentation, les moyens de dosage et les moyens de répartition.

De préférence, les moyens de dosage comprennent un cylindre doseur rotatif pourvu d'au moins une cavité, de préférence une rainure apte à définir une dose de poudre lors du dosage.

Alternativement, les moyens de dosage comprennent une trappe coulissante.

De préférence, les moyens de répartition comprennent une raclette.

Alternativement, les moyens de répartition comprennent un cylindre répartiteur dont la hauteur est de préférence ajustable en fonction de sa position angulaire.

Selon un mode de réalisation préféré de l'invention, les moyens de répartition et les moyens de dosage utilisent un cylindre commun.

De préférence, la machine selon l'invention comprend en outre un rouleau de compactage dont le déplacement en translation est solidaire du déplacement des moyens de répartition.

L'invention propose également un procédé pour la fabrication additive par frittage ou fusion de poudre à l'aide d'un faisceau énergétique comprenant des étapes consistant successivement à :
A- déposer une couche de poudre dans une zone de travail à l'aide d'un dispositif de mise en couche,
B- Fusionner ladite couche de poudre dans la zone de travail à l'aide du faisceau énergétique selon un motif correspondant à une section des pièces,
C- Reproduire les étapes A et B jusqu'à ce que les pièces soient terminées,
dans lequel on utilise une machine comportant deux zones de travail distinctes, chaque zone de travail reposant sur un plateau de travail distinct,
ledit procédé étant caractérisé en ce que l'on utilise un dispositif de mise en couche unique pour les deux zones de travail.

De préférence la couche de poudre est déposée sur la zone de travail par le dispositif de mise en couche parcourant la zone de travail dans le même sens pour les deux zones de travail.

De préférence, on utilise une source propre et des moyens de contrôle du faisceau énergétique propres à chacune des deux zones de travail.

L'invention sera mieux comprise grâce à la suite de la description, qui s'appuie sur les figures suivantes :
- La figure 1 est une vue schématique en coupe d'une machine selon l'état de la technique.
- La figure 2 est une vue schématique en coupe d'une machine selon un premier mode de réalisation de l'invention.
- Les figures 3, 4, 5, et 6 sont des vues schématiques d'étapes typiques du procédé de fabrication permis par la machine selon l'invention.
- La figure 7 est une vue schématique en coupe du dispositif de mise en couche d'une variante préférée de la machine de la figure 2.
- La figure 8 est une vue schématique en coupe du dispositif de mise en couche d'une machine selon un deuxième mode de réalisation de l'invention.
- La figure 9 est une vue schématique en coupe plus détaillée d'une variante préférée du dispositif de mise en couche de la figure 8.
- La figure 10 est une vue schématique en coupe du dispositif de mise en couche d'une machine selon un troisième mode de réalisation de l'invention.
- La figure 11 est une vue schématique en coupe plus détaillée d'une variante préférée du dispositif de mise en couche de la figure 10.
- La figure 12 est une vue schématique en coupe du dispositif de mise en couche d'une machine selon un quatrième mode de réalisation de l'invention.
- Les figures 13 à 16 sont des vues schématiques montrant le dispositif de mise en couche de la figure 12 au cours d'étapes successives de la mise en couche.

Sur les différentes figures, les éléments identiques ou similaires portent les mêmes références ou des références manifestement dérivées les unes des autres. La description de leur structure et de leur fonction n'est donc pas systématiquement reprise.

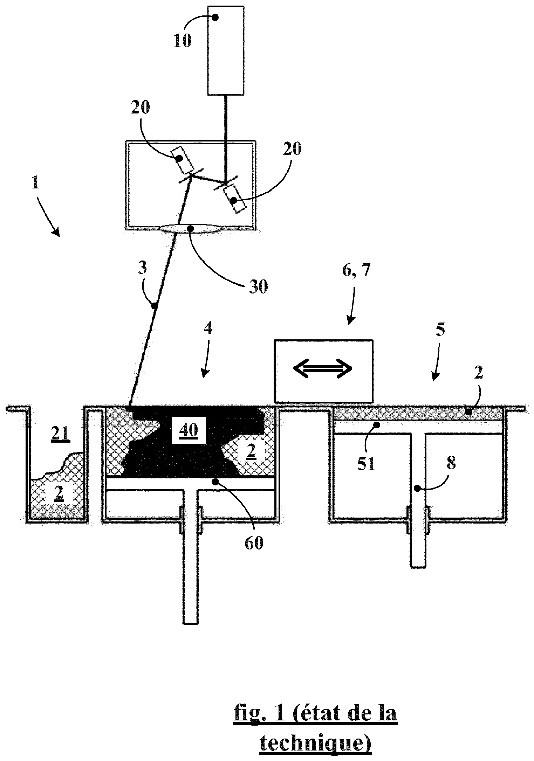

A la figure 1, on a représenté schématiquement une machine selon l'état de la technique pour la fabrication additive d'une pièce 40. Une source énergétique, ici une source laser 10 émet un faisceau laser 3 dont l'orientation est contrôlée par des miroirs soumis à des galvanomètres 20. Une lentille optique 30 permet de focaliser le faisceau 3 au niveau de la zone de travail 4 afin de chauffer la couche supérieure de la poudre 2 selon un motif précis et ainsi réaliser de manière sélective la fusion de la poudre, le motif correspondant à une section de la pièce à réaliser. Après le traitement par le faisceau d'une couche de poudre, le plateau de travail 60 est abaissé d'une épaisseur unitaire et recouvert d'une nouvelle couche de poudre et ainsi de suite afin de former couche après couche la pièce 40. Selon les types de faisceau énergétique et les poudres utilisés, l'épaisseur d'une couche de poudre peut varier de quelques micromètres (par exemple 10µm) à plusieurs centaines de micromètres (par exemple 500µm = 0.5 mm). Lorsque la pièce 40 est terminée c'est à dire lorsque les centaines ou les milliers de couches nécessaires à sa construction ont été successivement solidifiées, la pièce est évacuée de la zone de travail.

L'ensemble des éléments de la machine permettant l'application d'une nouvelle couche de poudre sur la zone de travail est généralement appelé « dispositif de mise en couche ». Le dispositif de mise en couche de l'état de la technique comprend des moyens de stockage 5 et des moyens de répartition 6 de la poudre 2 sur la zone de travail 4. Comme décrit plus haut, les moyens de stockage de l'état de la technique utilisent généralement un plateau mobile verticalement 51 similaire au plateau de travail 60. Les moyens de répartition 6 (non détaillés sur la figure 1) ont pour fonction de répartir une mince épaisseur de poudre sur l'ensemble de la zone de travail. Des moyens d'alimentation 7 (non détaillés sur la figure 1) ont pour fonction de transférer la poudre des moyens de stockage aux moyens de répartition 6. Les moyens de répartition et les moyens d'alimentation de l'état de la technique utilisent couramment des raclettes et/ou des rouleaux portés par un ou plusieurs chariots, lesdits chariots étant mobiles entre les moyens de stockage 5 et la zone de travail 4. Des moyens de dosage 8, ici des moyens permettant de contrôler précisément la montée du plateau mobile 51, permettent de contrôler la quantité de poudre mise en oeuvre à chaque utilisation du dispositif de mise en couche. Lorsque les moyens de répartition ont franchi la zone de travail (vers la gauche de la figure 1), le surplus de poudre est poussé dans un bac de récupération 21.

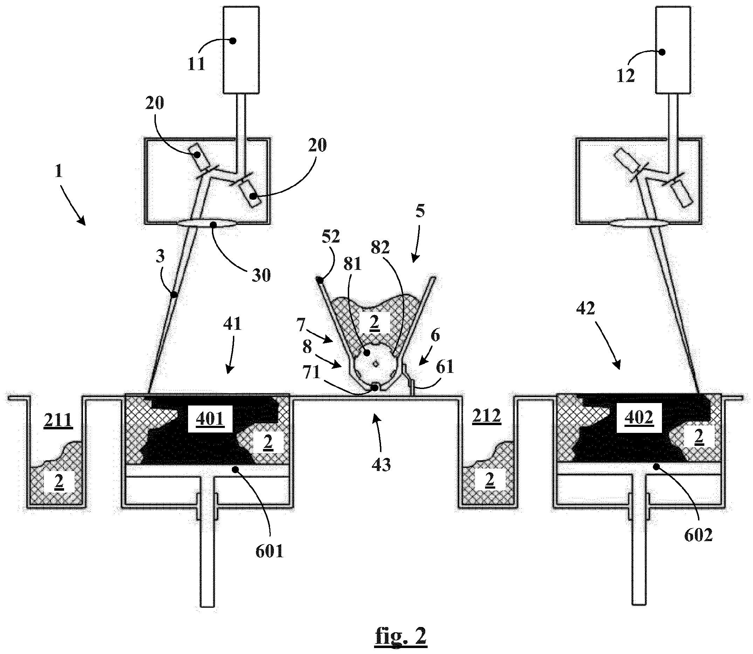

La figure 2 représente un premier mode de réalisation de la machine 1 selon l'invention. Une caractéristique essentielle de la machine selon l'invention est qu'elle comporte deux zones de travail 41 et 42 distinctes et que le dispositif de mise en couche est commun à ces deux zones de travail. La machine comporte donc deux plateaux de travail 601 et 602 distincts et mobiles indépendamment l'un de l'autre, chacune des deux zones reposant sur son propre plateau de travail. Les deux zones de travail sont coplanaires. La source et le contrôle du faisceau énergétique sont représentés identiques à l'état de la technique. Ceci n'est qu'un exemple. Comme décrit au préambule de la demande, l'invention s'applique en réalité à tous les types de fabrication additive à base de poudre par frittage ou par fusion totale des grains de ladite poudre à l'aide d'un faisceau énergétique comme un rayonnement électromagnétique (par exemple un faisceau laser) ou un faisceau de particules (par exemple un faisceau d'électrons). La suite de la présente description se concentre donc principalement sur le procédé et le dispositif de mise en couche et sur la coopération du dispositif de mise en couche avec les deux zones de travail. De préférence, la machine comprend une zone d'attente centrale 43 située entre les deux zones de travail. Lorsque le dispositif de mise en couche est stationné dans la zone d'attente, les deux zones de travail sont utilisables pour la fusion. Si la zone d'attente est située comme ici entre les deux zones de travail, cela permet en outre au dispositif de mise en couche d'entrer en action sur n'importe laquelle des deux zones de travail sans interrompre ni perturber le travail sur l'autre zone.

On a représenté ici un mode de réalisation préféré dans lequel la machine comprend en outre pour chaque zone de travail une source (11, 12) et des moyens de contrôle du faisceau énergétique propres. On peut cependant utiliser une source unique que l'on déplace ou dont on dévie le faisceau alternativement sur une zone ou sur l'autre comme décrit par exemple dans le document EP 1517779-B1. Le taux d'utilisation de la source commune peut alors tendre vers les 100%. L'intérêt d'une configuration utilisant une source unique est principalement de réduire encore le coût de la machine selon l'invention. Dans le cas représenté à la figure 2 où la machine comprend une source propre à chaque zone de travail, il est possible à la machine de réaliser simultanément la fusion de la poudre dans les deux zones de travail gauche 41 et droite 42 lorsque le dispositif de mise en couche est positionné dans la zone d'attente centrale 43. On comprend que la productivité globale de la machine est favorisée bien que les taux d'utilisation de chacune des deux sources restent bien inférieurs à 100%.

Les moyens de stockage 5 ont ici la forme d'une trémie 52 placée au-dessus du plan des zones de travail 41 et 42. Les moyens de répartition 6 utilisent une raclette 61. La raclette est solidaire de la trémie. Les moyens d'alimentation 7 utilisent simplement une ouverture inférieure 71 de la trémie pour transférer par gravité la poudre vers les moyens de répartition 6. Des moyens de dosage, ici sous la forme d'un cylindre doseur rotatif 81 comprenant au moins une cavité, permettent de contrôler la quantité de poudre transférée. Ladite cavité, de préférence une rainure 82, définit une dose reproductible de poudre. La ou les rainures(s) 82 s'étend(ent) sensiblement sur toute la longueur utile du cylindre doseur 81, c'est à dire sensiblement sur toute la largeur des zones de travail 41 et 42. Les dimensions et la forme de la section des rainures 82 peuvent varier le long du cylindre 81 afin d'améliorer encore la répartition de la poudre sur toute la zone de travail.

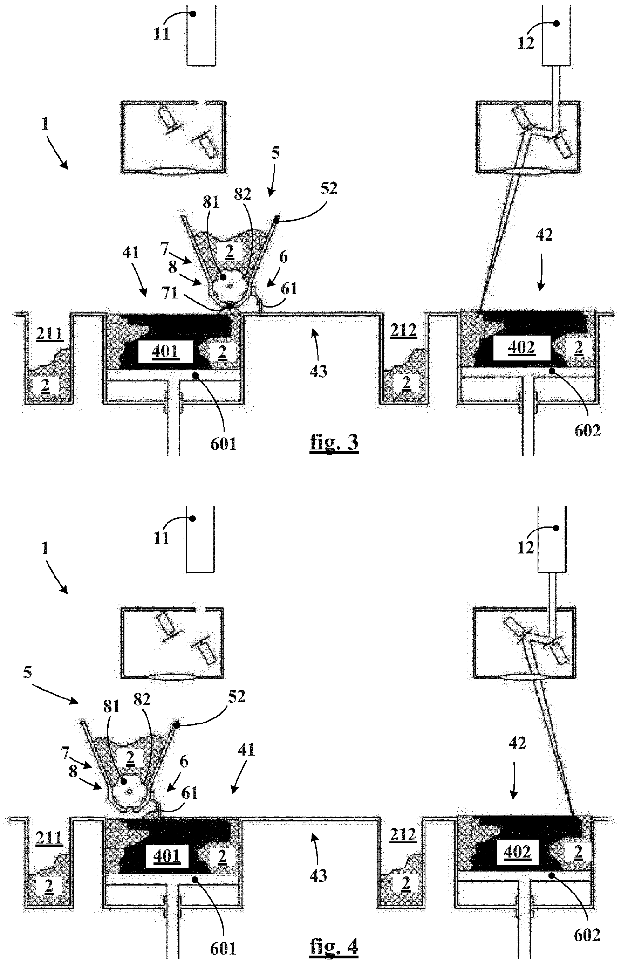

Aux figures 3 à 6, on a représenté schématiquement des étapes successives typiques du procédé de fabrication permis par la machine selon l'invention.

Aux figures 3, 4 et 5, on voit qu'une couche de poudre est progressivement déposée sur la zone de travail gauche 41 par le dispositif de mise en couche. En parallèle de cette mise en couche, la fusion d'une couche de poudre précédemment déposée se déroule dans l'autre zone de travail (zone de travail droite 42) pour constituer progressivement une pièce droite 402.

Plus précisément, on voit à la figure 3 qu'une première quantité de poudre est déposée sur la zone de travail à travers l'ouverture 71. Ladite quantité de poudre peut correspondre à une ou plusieurs doses, c'est à dire au contenu d'une ou plusieurs rainures 82 du cylindre doseur 81.

A la figure 4, les moyens de répartitions 6 sous la forme d'une raclette 61 répartissent la poudre en une fine couche sur la zone de travail 41. De préférence, de nouvelles doses de poudre sont progressivement ajoutées par les moyens d'alimentation au cours du déplacement des moyens de répartition.

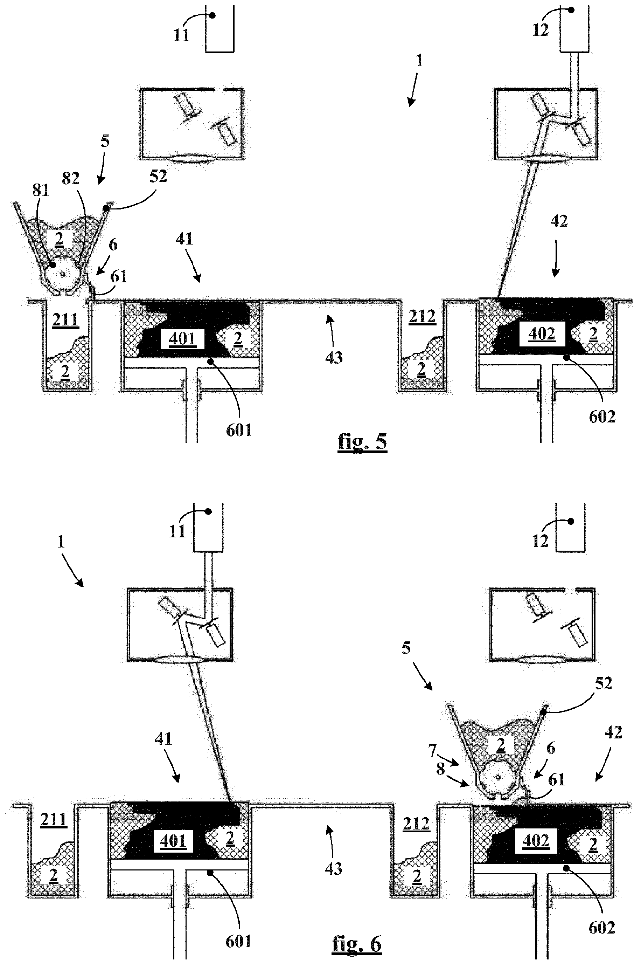

A la figure 5, le dispositif de mise en couche, après avoir parcouru toute la longueur de la zone de travail 41, pousse le surplus de poudre dans le bac de récupération 211 associé à cette zone de travail. La couche de poudre est alors prête à être fusionnée.

Lorsque la mise en couche est terminée sur la zone de travail gauche 41, le dispositif de mise en couche peut se positionner dans la zone d'attente centrale 43 afin d'être immédiatement disponible pour la préparation d'une nouvelle couche de poudre sur l'une ou l'autre des zones de travail. Il se peut alors que la fusion de la poudre se déroule simultanément sur les deux zones de travail comme représenté à la figure 2. Dès que la fusion d'une couche est terminée sur la zone de travail droite 42, le plateau de travail droit 402 peut être abaissé et le dispositif de mise en couche peut venir déposer une nouvelle couche de poudre sur cette zone de travail comme représenté à la figure 6. Ainsi l'unique dispositif de mise en couche est utilisé alternativement sur les deux zones de travail. Bien sûr, on comprend qu'en pratique les séquences de mise en couche ne sont pas nécessairement alternées entre les deux zones de travail. Cela dépend du temps effectivement nécessaire à la fusion pour chaque couche de chacune des deux pièces 401 et 402. Par exemple, il se peut tout à fait que le temps de fusion d'une couche dans l'une des zones de travail soit relativement long alors que, dans le même temps, deux ou plusieurs couches peuvent être déposées et fusionnées dans l'autre zone de travail. Il se peut également que l'on multiplie les couches déposées et fusionnées sur l'une des pièces pendant que l'autre pièce est évacuée de la machine et/ou que l'on prépare la zone de travail pour la fabrication d'une nouvelle pièce. Ce qu'il faut donc retenir, c'est que la machine selon l'invention permet un travail pratiquement indépendant sur les deux zones de travail, en particulier dans le cas représenté ici où elle comprend deux sources de faisceau énergétique, une pour chaque zone de travail.

De préférence, le dispositif de mise en couche permet de réaliser la mise en couche en une seule passe, en balayant chacune des deux zones de travail dans le même sens, par exemple de la droite vers la gauche comme représenté sur les figures 3 à 6. Ce choix d'une architecture et d'un fonctionnement asymétrique de la machine permet une conception plus simple et donc plus légère du dispositif de mise en couche.

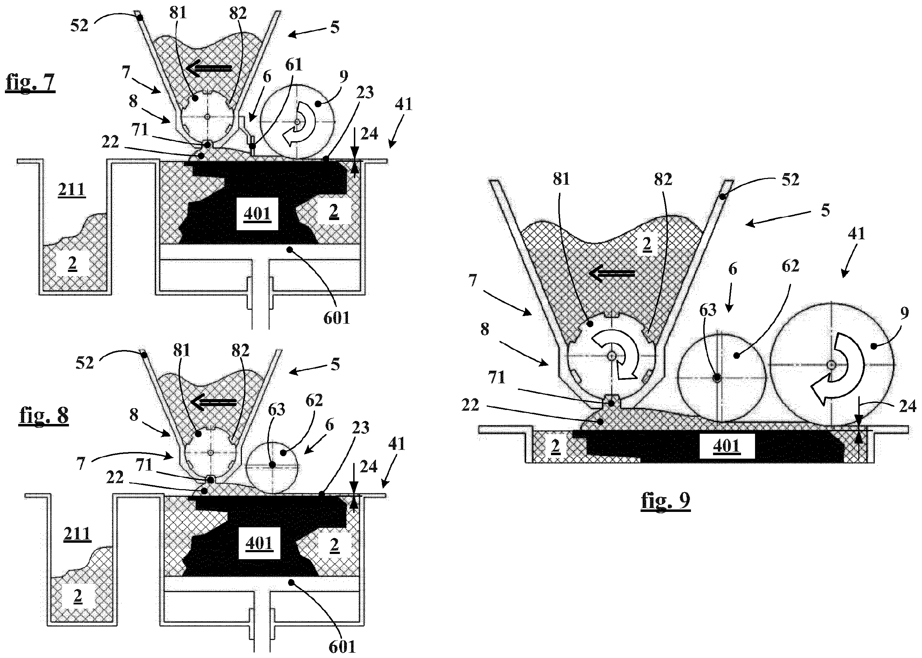

A la figure 7, on a représenté à une échelle supérieure le dispositif de mise en couche des figures précédentes pendant l'opération de mise en couche sur l'une de zones de travail, ici la zone de travail gauche 41. De manière générale dans la présente demande comme souvent dans les documents de l'état de la technique, les épaisseurs de poudre sont représentées très amplifiées afin d'être simplement visible du lecteur. Il est en effet impossible de représenter par exemple une épaisseur de 50 µm et une zone de travail de 500 mm de longueur sur le même dessin en respectant fidèlement les proportions.

A la figure 7, la trémie 52 se déplace vers la gauche de la figure en même temps que la raclette 61. La raclette répartit et lisse la couche de poudre sur la zone de travail 41. Le tas 22 de poudre situé devant la raclette est dosé par le cylindre doseur 81. L'apport de poudre peut se faire en une seule fois pour chaque couche. Cependant, de préférence, le dosage est progressif, c'est à dire que l'apport de poudre est réalisé progressivement en délivrant plusieurs fois le contenu d'une rainure au cours de la traversée de la zone de travail, ce qui permet de réduire la variabilité des conditions de travail de la raclette et donc de garantir une meilleure régularité de l'épaisseur et de la compacité du lit de poudre obtenue.

La figure 7 illustre en outre une variante préférée du premier mode de réalisation de l'invention dans laquelle on utilise en outre un rouleau de compactage 9. L'épaisseur finale 24 de la couche 23 de poudre est donc le résultat de deux opérations successives. Une première épaisseur est définie par les moyens de répartition 6, ici la raclette 61. Cette épaisseur est ensuite réduite et rendue encore plus homogène par l'action du rouleau de compactage 9. Le rouleau se déplace avec la trémie et la raclette. De préférence encore, le rouleau est contre-rotatif, c'est à dire qu'il est motorisé de manière à tourner dans le sens inverse de son déplacement relativement au lit de poudre (comme symbolisé par la flèche qui montre une rotation dans le sens horaire alors que le rouleau se déplace vers la gauche).

A la figure 8, on a représenté un deuxième mode de réalisation du dispositif de mise en couche dans lequel les moyens de répartition 6 utilisent un cylindre répartiteur 62 en lieu et place de la raclette du premier mode de réalisation. Le déplacement du cylindre répartiteur 62 est lié à celui de la trémie 51, comme pour la raclette 61 du premier mode de réalisation. Le cylindre 62 peut être fixe en rotation ou contre-rotatif. Lorsque le cylindre répartiteur est fixe, sa fixation 63 est de préférence excentrique ce qui permet de régler finement sa hauteur et donc l'épaisseur finale 24 de la couche de poudre 23 obtenue.

Comme représenté à la figure 9, un rouleau de compactage 9 contre-rotatif peut avantageusement être associé au dispositif de mise en couche selon le deuxième mode de réalisation dans les mêmes conditions que décrit plus haut en référence à la figure 7.

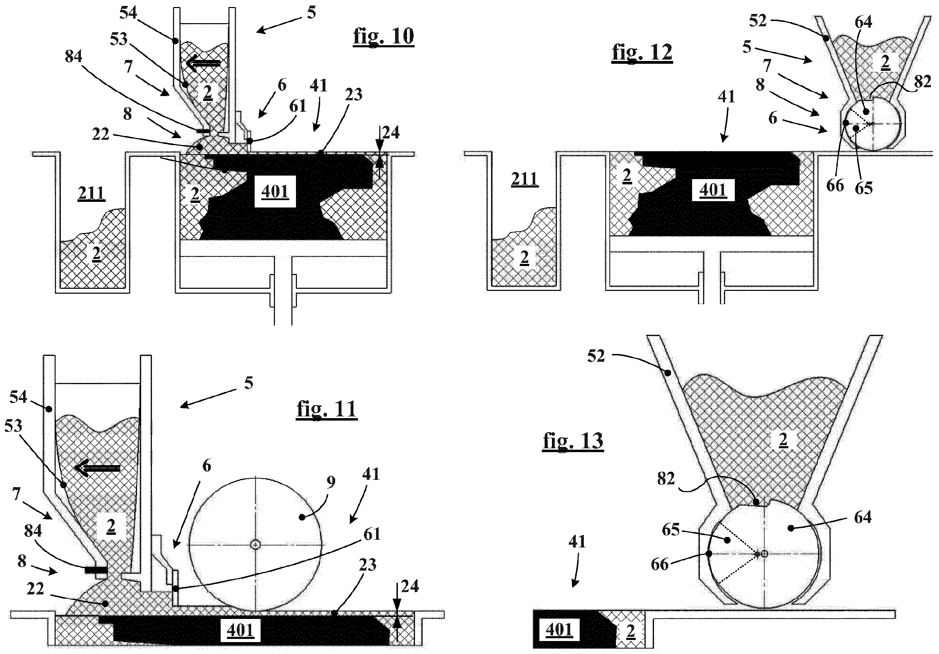

La figure 10 représente un troisième mode de réalisation. Il diffère principalement du premier mode en ce que les moyens de dosage 8 utilisent une trappe coulissante 84 dont la durée et l'amplitude de l'ouverture conditionne la quantité de poudre transférée aux moyens de répartition 6. De préférence, les moyens de stockage 5 utilisent une trémie souple 53 porté par un support de trémie 54 afin de réduire le risque de colmatage de la poudre. Selon les types de poudre utilisés, des moyens de décolmatage actifs supplémentaires (non représentés) peuvent être mis en oeuvre.

A la figure 11, on a représenté à plus grande échelle une variante du troisième mode de réalisation comprenant en outre un rouleau de compactage 9 contre-rotatif dont les déplacements sont solidaires de la raclette et de la trémie tel que décrit plus haut en référence à la figure 7.

La figure 12 représente un quatrième mode de réalisation du dispositif de mise en couche selon l'invention dans lequel les moyens de dosage 8 et les moyens de répartition 6 utilisent un cylindre rotatif commun 64. La fonction de dosage est assurée grâce à une rainure 82 du cylindre commun 64 selon le principe décrit plus haut en référence à la figure 2. La fonction de répartition est assurée par un secteur lisseur 65 du cylindre commun 64 selon le principe décrit plus haut en référence à la figure 8. Un avantage de ce mode de réalisation est qu'il permet d'alléger encore le dispositif de mise en couche de la machine selon l'invention. De préférence, le cylindre commun 64 est fixe en rotation lors de son déplacement sur la zone de travail. Le secteur lisseur 65, c'est à dire la partie du cylindre destinée à la répartition de la poudre est symboliquement délimité par des traits pointillés sur les figures 12 à 16. De préférence, ce secteur comporte un renflement 66. Ce renflement de faible hauteur dans l'absolu (par exemple quelques dixièmes de millimètres tout au plus) est à peine perceptible sur les figures malgré son amplification.

Le fonctionnement de ce mode de réalisation est détaillé aux figures 13 à 16 qui montrent les configurations successives du dispositif lors d'un cycle de mise en couche.

A la figure 13, le dispositif de mise en couche est dans une configuration d'attente, comme par exemple entre deux couches successives. La poudre 2 est retenue dans la trémie 52 fermée par le contact hermétique du cylindre commun 64. La rainure 82 peut se charger de poudre.

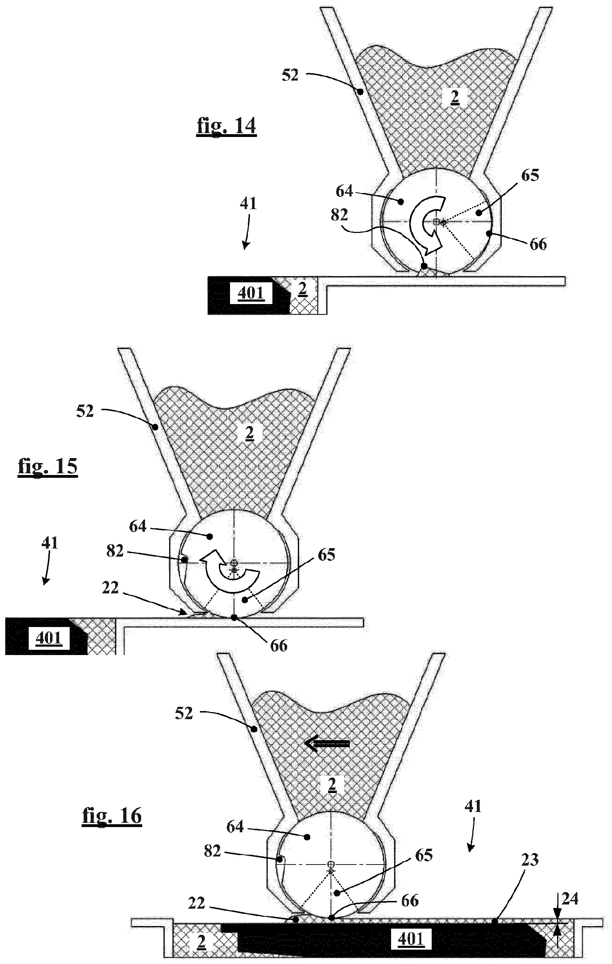

A la figure 14, le cylindre commun 64 a tourné d'environ un demi-tour dans le sens anti-horaire et déposé une dose de poudre à proximité de la zone de travail 41.

A la figure 15, le cylindre commun 64 a tourné d'environ un quart de tour dans le sens horaire afin d'amener le secteur lisseur 65 au contact du tas de poudre 22 et à la hauteur appropriée. Le fait que le secteur lisseur comporte un renflement 66 permet de régler finement l'épaisseur de lissage par le choix de la position angulaire adoptée par le cylindre commun 64.

A la figure 16, le dispositif de mise en couche traverse la zone de travail 41 comme décrit précédemment en poussant le tas de poudre 22 au-dessus de la pièce 401 pour lisser une couche de poudre 23 d'épaisseur finale 24. Afin de limiter les variations de pression sur toute la longueur de la zone de travail, la phase d'alimentation décrite aux figures 13 et 14 peut être répétée une ou plusieurs fois au cours d'une seule traversée de la zone de travail, auquel cas la dose définie par la rainure 82 représente de préférence une fraction de la quantité de poudre nécessaire pour une couche complète.

Alternativement, la phase de dépôt de poudre peut être réalisée plusieurs fois de suite sans mouvement de lissage afin de créer dans la configuration de la figure 15 un tas 22 correspondant à plusieurs doses unitaires telles que définies par la rainure 82.

Rappelons que (comme expliqué plus haut) les épaisseurs des couches, les volumes des tas, des rainures ou du renflement 66 ne sont pas représentés à une échelle cohérente mais au contraire volontairement faussée dans le but de rendre les figures lisibles.

Bien sûr, comme décrit pour les autres modes de réalisation de l'invention le dispositif de mise en couche des figures 12 à 16 peut comprendre en outre un rouleau compacteur contre-rotatif (non représenté ici).

On comprend qu'une couche peut être réalisée selon l'invention en un seul passage, c'est à dire en une seule traversée de la zone de travail, qu'il s'agisse de l'une ou de l'autre zone de travail. De préférence, la quantité de poudre stockée dans la trémie est suffisante pour réaliser des centaines, voire des milliers de couches c'est à dire que la machine pourrait réaliser la fabrication additive d'une ou plusieurs pièce(s) complète(s)te sans recharger la trémie. De préférence le rechargement de la trémie est réalisé à un moment où le dispositif de mise en couche n'est pas mis en oeuvre. Le rechargement peut par exemple se faire lorsque la fabrication des pièces est terminée et que les pièces finies sont évacuées avant qu'une nouvelle fabrication commence mais également pendant les phases de fusion (y compris fusions simultanées sur les deux zones de travail).

La poudre utilisée est de préférence une poudre métallique ou céramique. Selon les types de faisceaux énergétiques mis en oeuvre et selon l'épaisseur de la couche finale visée, le diamètre moyen des particules de la poudre peut varier de quelques microns (par exemple 5 µm) à 300 ou 400 µm.

La description de la machine et du procédé selon l'invention qui vient d'être faite à l'appui de représentations principalement de la seule partie gauche de la machine (pour des raisons d'échelle) s'applique bien sûr à la partie droite. En revanche, l'homme du métier comprend qu'il n'est pas nécessaire que les deux parties de la machines soient identiques. L'homme du métier comprend également que les différents modes de réalisation décrits et illustrés ici sont des exemples particuliers de combinaisons de moyens selon l'invention. D'autres combinaisons ou substitutions évidentes des différents moyens font également partie de l'invention comme par exemple le remplacement dans le troisième mode de réalisation (figures 10 et 11) de la raclette 61 par un cylindre répartiteur 62 selon le deuxième mode de réalisation des figures 8 et 9.

## Revendications

1. Machine (1) pour la fabrication additive par frittage ou fusion de poudre (2) à l'aide d'un faisceau énergétique (3) agissant sur une couche de poudre (23) dans une zone de travail (41, 42), ladite machine comprenant un dispositif de mise en couche de ladite poudre, ledit dispositif comprenant :
• des moyens de stockage (5) de la poudre,
• des moyens de répartition (6) de la poudre aptes à parcourir la zone de travail afin de répartir la poudre en une couche (23) d'épaisseur finale (24) adaptée à la fabrication additive,
• des moyens d'alimentation (7) aptes à transférer la poudre des moyens de stockage (5) aux moyens de répartition (6),
• des moyens de dosage (8) aptes à contrôler la quantité de poudre transférée des moyens de stockage (5) aux moyens de répartition (6),
• les moyens de stockage (5) sont placés plus haut que la zone de travail (4),
• les moyens d'alimentation (7) utilisent la gravité,
• les moyens d'alimentation (7) et les moyens de dosage (8) sont mobiles avec les moyens de répartition (6).
• la machine comporte deux zones de travail distinctes (41, 42)
• la machine comporte deux plateaux de travail distincts (601, 602) et mobiles indépendamment l'un de l'autre,
• chacun des deux plateaux de travail distincts (601, 602) est associé à une seule des deux zones de travail distinctes (41, 42),
ladite machine étant **caractérisée en ce que** :
• le dispositif de mise en couche est commun aux deux zones de travail.

2. Machine selon la revendication 1 comprenant en outre une zone d'attente centrale (43) située entre les deux zones de travail (41, 42), ladite zone d'attente centrale étant apte à accueillir le dispositif de mise en couche.

3. Machine selon l'une des revendications précédentes comprenant, une source propre (11, 12) et des moyens de contrôle du faisceau énergétique (3) propres à chacune des deux zones de travail (41,42).

4. Machine selon l'une des revendications précédentes dans laquelle le dispositif de mise en couche est configuré de manière à réaliser la mise en couche en parcourant la zone de travail dans le même sens pour les deux zones de travail.

5. Machine selon l'une des revendications précédentes dans laquelle le dispositif de mise en couche est configuré de manière à réaliser la mise en couche en une seule passe sur une zone de travail.

6. Machine selon l'une des revendications précédentes dans laquelle les moyens de stockage comprennent une trémie (52; 53), ladite trémie étant mobile avec les moyens d'alimentation (7), les moyens de dosage (8) et les moyens de répartition (6).

7. Machine selon l'une des revendications précédentes dans laquelle les moyens de dosage comprennent un cylindre doseur rotatif (81) pourvu d'au moins une cavité, de préférence une rainure (82) apte à définir une dose de poudre lors du dosage.

8. Machine selon l'une des revendications 1 à 6 dans laquelle les moyens de dosage comprennent une trappe coulissante (84).

9. Machine selon l'une des revendications précédentes dans laquelle les moyens de répartition (6) comprennent une raclette (61).

10. Machine selon l'une des revendications 1 à 8 dans laquelle les moyens de répartition (6) comprennent un cylindre répartiteur (62).

11. Machine selon la revendication 10 dans laquelle la hauteur du cylindre répartiteur (62) est ajustable en fonction de la position angulaire dudit cylindre.

12. Machine selon les revendications 7 et 10 dans laquelle les moyens de répartition et les moyens de dosage utilisent un cylindre commun (64).

13. Machine selon l'une des revendications précédentes comprenant en outre un rouleau de compactage (9) dont le déplacement en translation est solidaire du déplacement des moyens de répartition.

14. Procédé pour la fabrication additive de pièces (401, 402) par frittage ou fusion de poudre (2) à l'aide d'un faisceau énergétique (3) comprenant des étapes consistant successivement à :
A- déposer une couche de poudre (23) dans une zone de travail (41, 42) à l'aide d'un dispositif de mise en couche,
B- Fusionner ladite couche de poudre dans la zone de travail (41, 42) à l'aide du faisceau énergétique (3) selon un motif correspondant à une section des pièces,
C- Reproduire les étapes A et B jusqu'à ce que les pièces soient terminées,
et dans lequel on utilise une machine comportant deux zones de travail distinctes (41, 42), chaque zone de travail reposant sur un plateau de travail distinct (601 ; 602),
ledit procédé étant **caractérisé en ce que** l'on utilise un dispositif de mise en couche unique pour les deux zones de travail.

15. Procédé selon la revendication 14 dans lequel la couche de poudre est déposée sur la zone de travail par le dispositif de mise en couche parcourant la zone de travail dans le même sens pour les deux zones de travail.

16. Procédé selon la revendication 14 dans lequel on utilise une source propre (11, 12) et des moyens de contrôle du faisceau énergétique (3) propres à chacune des deux zones de travail (41, 42).

## Patentansprüche

1. Maschine (1) zur additiven Fertigung durch Sintern oder Schmelzen von Pulver (2) mithilfe eines Energiestrahls (3), der auf eine Schicht aus Pulver (23) in einem Arbeitsbereich (41, 42) einwirkt, die Maschine umfassend eine Vorrichtung zur Ausbreitung des Pulvers zu einer Schicht, die Vorrichtung umfassend:
• Mittel zur Lagerung (5) des Pulvers,
• Mittel zum Verteilen (6) des Pulvers, die geeignet sind, den Arbeitsbereich abzufahren, um das Pulver zu einer Schicht (23) mit einer endgültigen Dicke (24) zu verteilen, die an die additive Fertigung angepasst ist,
• Zufuhrmittel (7), die geeignet sind, das Pulver von den Mitteln zur Lagerung (5) zu den Mitteln zum Verteilen (6) zu übertragen,
• Dosierungsmittel (8), die geeignet sind, die Pulvermenge zu steuern, die von den Mitteln zur Lagerung (5) zu den Mitteln zum Verteilen (6) übertragen wird,
• die Mittel zur Lagerung (5) sind höher als der Arbeitsbereich (4) platziert,
• die Zufuhrmittel (7) nutzen die Schwerkraft,
• die Zufuhrmittel (7) und die Dosierungsmittel (8) sind mit den Mitteln zum Verteilen (6) beweglich,
• die Maschine umfasst zwei separate Arbeitsbereiche (41, 42)
• die Maschine umfasst zwei Arbeitsplatten (601, 602), die separat und unabhängig voneinander beweglich sind,
• jede der zwei separaten Arbeitsplatten (601, 602) steht mit einem einzelnen der zwei separaten Arbeitsbereiche (41, 42) in Verbindung,
wobei die Maschine **dadurch gekennzeichnet ist, dass**:
• die Vorrichtung zur Ausbreitung zu einer Schicht den zwei Arbeitsbereichen gemeinsam ist.

2. Maschine nach Anspruch 1, ferner umfassend einen mittleren Wartebereich (43), der zwischen den zwei Arbeitsbereichen (41, 42) gelegen ist, wobei der mittlere Wartebereich geeignet ist, die Vorrichtung zur Ausbreitung zu einer Schicht aufzunehmen.

3. Maschine nach einem der vorhergehenden Ansprüche, umfassend eine eigene Quelle (11, 12) und Mittel zur Steuerung des Energiestrahls (3), die jedem der zwei Arbeitsbereiche (41, 42) zu eigen sind.

4. Maschine nach einem der vorhergehenden Ansprüche, wobei die Vorrichtung zur Ausbreitung zu einer Schicht derart konfiguriert ist, dass sie die Ausbreitung zu einer Schicht durch Abfahren des Arbeitsbereichs in derselben Richtung für die zwei Arbeitsbereiche ausführt.

5. Maschine nach einem der vorhergehenden Ansprüche, wobei die Vorrichtung zur Ausbreitung zu einer Schicht derart konfiguriert ist, dass sie die Ausbreitung zu einer Schicht in einem einzigen Durchgang auf einem Arbeitsbereich ausführt.

6. Maschine nach einem der vorhergehenden Ansprüche, wobei die Mittel zur Lagerung ein Sieb (52; 53) umfassen, wobei das Sieb mit den Zufuhrmitteln (7), den Dosierungsmitteln (8) und den Mitteln zum Verteilen (6) beweglich ist.

7. Maschine nach einem der vorhergehenden Ansprüche, wobei die Dosierungsmittel einen drehbaren Dosierungszylinder (81) umfassen, der mit mindestens einem Hohlraum versehen ist, vorzugsweise einer Rille (82), die geeignet ist, bei der Dosierung eine Pulverdosis zu definieren.

8. Maschine nach einem der Ansprüche 1 bis 6, wobei die Dosierungsmittel eine verschiebbare Tür (84) umfassen.

9. Maschine nach einem der vorhergehenden Ansprüche, wobei die Mittel zum Verteilen (6) einen Schaber (61) umfassen.

10. Maschine nach einem der Ansprüche 1 bis 8, wobei die Mittel zum Verteilen (6) einen Verteilungszylinder (62) umfassen.

11. Maschine nach Anspruch 10, wobei die Höhe des Verteilungszylinders (62) in Abhängigkeit von der Winkelposition des Zylinders einstellbar ist.

12. Maschine nach den Ansprüchen 7 und 10, wobei die Mittel zum Verteilen und die Dosierungsmittel einen gemeinsamen Zylinder (64) nutzen.

13. Maschine nach einem der vorhergehenden Ansprüche, ferner umfassend eine Verdichtungswalze (9), deren Translationsbewegung integral mit der Bewegung der Mittel zum Verteilen ist.

14. Verfahren zur additiven Fertigung von Teilen (401, 402) durch Sintern oder Schmelzen von Pulver (2) mithilfe eines Energiestrahls (3), umfassend die folgenden aufeinanderfolgenden Schritte:
A. Abscheiden einer Schicht aus Pulver (23) in einem Arbeitsbereich (41, 42) mithilfe einer Vorrichtung zur Ausbreitung zu einer Schicht,
B. Schmelzen der Schicht aus Pulver in dem Arbeitsbereich (41, 42) mithilfe des Energiestrahls (3) gemäß einem Motiv, das einem Querschnitt der Teile entspricht,
C. Reproduzieren der Schritte A und B, bis die Teile fertiggestellt sind,
und wobei eine Maschine genutzt wird, die zwei separate Arbeitsbereiche (41, 42) umfasst, wobei jeder Arbeitsbereich auf einer separaten Arbeitsplatte (601; 602) ruht,
wobei das Verfahren **dadurch gekennzeichnet ist, dass** eine einzelne Vorrichtung zur Ausbreitung zu einer Schicht für die zwei Arbeitsbereiche genutzt wird.

15. Verfahren nach Anspruch 14, wobei die Schicht aus Pulver durch die Vorrichtung zur Ausbreitung zu einer Schicht auf dem Arbeitsbereich abgeschieden wird, wobei die Vorrichtung den Arbeitsbereich in derselben Richtung für die zwei Arbeitsbereiche abfährt.

16. Verfahren nach Anspruch 14, wobei eine eigene Quelle (11, 12) und Mittel zur Steuerung des Energiestrahls (3), die jedem der zwei Arbeitsbereiche (41, 42) zu eigen sind, genutzt werden.

## Claims

1. Machine (1) for additive manufacturing by sintering or melting powder (2) using an energy beam (3) acting on a powder layer (23) in a working zone (41, 42), said machine comprising a device for layering said powder, said device comprising:
• means (5) for storing the powder,
• means (6) for distributing the powder that are able to travel over the working zone in order to distribute the powder in a layer (23) having a final thickness (24) suitable for additive manufacturing,
• feeding means (7) that are able to transfer the powder from the storage means (5) to the distributing means (6),
• metering means (8) that are able to control the quantity of powder transferred from the storage means (5) to the distributing means (6),
• the storage means (5) are positioned higher than the working zone (4),
• the feeding means (7) utilize gravity,
• the feeding means (7) and the metering means (8) are able to move with the distributing means (6),
• the machine has two separate working zones (41, 42),
• the machine has two separate working trays (601, 602) that are able to move independently of one another,
• each of the two separate working trays (601, 602) is associated with only one of the two separate working zones (41, 42),
said machine being **characterized in that:**
• the layering device is common to both working zones.

2. Machine according to Claim 1, also comprising a central waiting zone (43) located between the two working zones (41, 42), said central waiting zone being able to accommodate the layering device.

3. Machine according to either of the preceding claims, comprising a source (11, 12) and means (3) for controlling the energy beam, said source (11, 12) and means (3) being inherent to each of the two working zones (41, 42).

4. Machine according to one of the preceding claims, wherein the layering device is configured so as to carry out the layering by travelling over the working zone in the same direction for both working zones.

5. Machine according to one of the preceding claims, wherein the layering device is configured so as to carry out the layering in a single pass over a working zone.

6. Machine according to one of the preceding claims, wherein the storage means comprise a hopper (52; 53), said hopper being able to move with the feeding means (7), the metering means (8) and the distributing means (6).

7. Machine according to one of the preceding claims, wherein the metering means comprise a rotary metering roll (81) provided with at least one cavity, preferably a groove (82) capable of defining a metered quantity of powder during metering.

8. Machine according to one of Claims 1 to 6, wherein the metering means comprise a sliding hatch (84).

9. Machine according to one of the preceding claims, wherein the distributing means (6) comprise a scraper (61).

10. Machine according to one of Claims 1 to 8, wherein the distributing means (6) comprise a distributing roll (62).

11. Machine according to Claim 10, wherein the height of the distributing roll (62) is adjustable depending on the angular position of said roll.

12. Machine according to Claims 7 and 10, wherein the distributing means and the metering means use a common roll (64).

13. Machine according to one of the preceding claims, also comprising a compacting roller (9), the movement in translation of which is integral with the movement of the distributing means.

14. Process for the additive manufacturing of components (401, 402) by sintering or melting powder (2) using an energy beam (3), comprising steps that consist successively of:
A- depositing a layer of powder (23) in a working zone (41, 42) using a layering device,
B- melting said layer of powder in the working zone (41, 42) using an energy beam (3) in a pattern corresponding to a section of the components,
C- repeating steps A and B until the components are finished,
and wherein a machine having two separate working zones (41, 42) is used, each working zone resting on a separate working tray (601; 602),
said process being **characterized in that** a single layering device is used for both working zones.

15. Process according to Claim 14, wherein the layer of powder is deposited on the working zone by the layering device travelling over the working zone in the same direction for both working zones.

16. Process according to Claim 14, wherein a source (11, 12) and means (3) for controlling the energy beam are used, said source (11, 12) and means (3) being inherent to each of the two working zones (41, 42).
